# EUROPÄISCHE PATENTSCHRIFT

(11) **EP 1 686 016 B1**
(45) Veröffentlichungstag und Bekanntmachung des Hinweises auf die Patenterteilung: **19.03.2008**
(21) Anmeldenummer: 05025888.8
(22) Anmeldetag: 28.11.2005
(51) Int. Cl.: B60R 21/16

(54) **Gassack mit Abströmöffnung**
Airbag with vent opening
Coussin gonflable avec trou d'évent

(30) Priorität: 26.01.2005 DE 102005003703
(43) Veröffentlichungstag der Anmeldung: 02.08.2006
(73) Patentinhaber: TRW Automotive GmbH, 73553 Alfdorf (DE)
(72) Erfinder: Aranzulla, Daniele, 73525 Schwäbisch Gmünd (DE); Ißler, Bernd, 73660 Urbach (DE)
(74) Vertreter: Strass, Jürgen

(56) Entgegenhaltungen:
- EP-A2- 1 044 855
- US-A- 5 246 250

## Beschreibung

Die Erfindung betrifft einen Gassack für eine Fahrzeuginsassen-Rückhalteeinrichtung nach dem Oberbegriff des Anspruchs 1.

Bei einem Gassack mit einer Abströmöffnung ist es wünschenswert, daß die Abströmöffnung während des Aufblasvorgangs möglichst geschlossen bleibt, damit die zum vollständigen Befüllen des Gassacks notwendige Gasmenge gering gehalten werden kann. Es ist weiterhin wünschenswert, die Härte des Gassacks an die jeweilige Situation anzupassen. Dies kann bekanntermaßen durch eine vom Innendruck des Gassacks abhängige Freigabe der Abströmöffnung erreicht werden. Auf diese Weise wird bei einem frühzeitigen Kontakt des sich entfaltenden Gassacks mit dem Fahrzeuginsassen oder einem Hindernis ein Abströmen von Gas während der Entfaltungsphase gestattet. Außerdem kann durch die druckabhängige Freigabe der Abströmöffnung regulierend auf die Belastung des in den Gassack eintauchenden Fahrzeuginsassen, insbesondere bezüglich dessen Körpergewichts, Einfluß genommen werden.

Die GB 2 302 845 A zeigt einen Gassack mit einer Abströmöffnung, die durch eine aufgenähte Abdeckung geschlossen ist. Die Abdeckung kann bei einem Eindringen des Fahrzeuginsassen in den Gassack mittels eines an der Abdeckung befestigten Zugmittels abgelöst werden, um die Abströmöffnung freizugeben.

Aus der EP 1 393 989 A1 ist es ebenfalls bekannt, eine Abströmöffnung durch einen an der Gassackwand befestigten Lappen zu sichern, der erst bei Überschreiten eines bestimmten Innendrucks abgelöst wird. Die durch mehrere Schnitte in der Gassackwand gebildete Abströmöffnung ist kleiner als der nach der Ablösung des Lappens resultierende Abströmquerschnitt.

Ein Gassack mit Öffnungen in einer inneren und einer äußeren Gewebeschicht ist aus der DE 296 09 703 U1 bekannt. Die äußere Gewebeschicht weist einen gerafften Bereich auf, der durch eine Reißnaht gesichert ist. Je nachdem wieviel Gas von einem mehrstufigen Gasgenerator zur Befüllung des Gassacks bereitgestellt wird, reißt diese Naht auf oder nicht. Bei einem Aufreißen verschiebt sich die äußere Gewebeschicht mit ihrer Öffnung relativ zur Öffnung der inneren Gewebeschicht, wodurch der effektive Abströmquerschnitt verändert wird.

Aus der US 5 246 250 A ist ein Gassack mit den Merkmalen des Oberbegriffs des Anspruchs 1 bekannt. Dieser Gassack weist eine Ventilvorrichtung mit einer zwischen zwei Streifen angeordneten Ventilklappe auf. Die Ventilklappe hat einen anfangs gestapelten, gasdurchlässigen Abschnitt und einen gasundurchlässigen Abschnitt, der in einem der Streifen gebildete Öffnungen überdeckt und mit einem Fangband verbunden ist. Abhängig von der Zugbeanspruchung durch das Fangband wird der gasundurchlässige Abschnitt von den Öffnungen weggezogen, und der gasdurchlässige Abschnitt überdeckt in gestreckter Form die Öffnungen, so daß Gas aus dem Gassack austreten kann.

Aufgabe der Erfindung ist es, einen Gassack zu schaffen, der ohne aufwendige Maßnahmen eine automatische, sehr variable Anpassung der Gassackhärte ermöglicht.

Dies wird gemäß der Erfindung durch einen Gassack mit den Merkmalen des Anspruchs 1 erreicht. Die Verschiebung der mittleren Gewebeschicht erlaubt eine vorher festlegbare Änderung der Ausrichtung der Öffnungen in den einzelnen Gewebeschichten. Dadurch kann eine reversible, gassackinnendruckabhängige Anpassung des effektiven Abströmquerschnitts erzielt werden, ohne daß dafür eine Reißnaht oder ein mehrstufiger Gasgenerator zwingend erforderlich sind.

Vorzugsweise sind die innere und die äußere Gewebeschicht so miteinander verbunden, daß dazwischen ein Zwischenraum gebildet ist, in dem die mittlere Gewebeschicht angeordnet ist, wobei die mittlere Gewebeschicht an einer Stelle sowohl mit der inneren als auch mit der äußeren Gewebeschicht verbunden ist. Bei einer solchen Konstruktion dehnen sich die innere und die äußere Gewebeschicht bei steigendem Gassackinnendruck "synchron" miteinander, während die mittlere Gewebeschicht nur an der Verbindungsstelle zur inneren und äußeren Gewebeschicht eine Dehnung erfährt, so daß sich dadurch die relative Verschiebung der Öffnungen zueinander ergibt.

Gemäß einer bevorzugten Ausführungsform ist die mittlere Gewebeschicht in einem Zentrumsabschnitt mit der inneren und der äußeren Gewebeschicht verbunden.

Um ein Abströmen von Gas bis zur vollständigen Entfaltung des Gassacks weitgehend zu verhindern, sollte die Öffnung der mittleren Gewebeschicht im aufgeblasenen Zustand des Gassacks versetzt zu den Öffnungen der inneren und der äußeren Gewebeschicht angeordnet sein.

Die innere und die äußere Gewebeschicht sind vorzugsweise durch eine die mittlere Gewebeschicht vollständig umgebende Naht oder Klebung oder dergleichen miteinander verbunden, um ein anderweitiges Entweichen des Gases zu verhindern.

In den Gewebeschichten können auch mehrere miteinander korrespondierende Öffnungen vorgesehen sein.

Weitere Merkmale und Vorteile der Erfindung ergeben sich aus der nachfolgenden Beschreibung einer bevorzugten Ausführungsform und aus den beigefügten Zeichnungen, auf die Bezug genommen wird. In den Zeichnungen zeigen:
Figur 1 eine perspektivische Ansicht eines Teils eines erfindungsgemäßen Gassacks mit einer transparenten oberen Gewebeschicht;
Figur 2 eine schematische Querschnittansicht des Teils aus Fig. 1 bei aufgeblasenem Gassack; und
Figuren 3 bis 5 die Ansicht aus Fig. 2 bei unterschiedlichen Belastungen des Gassacks.

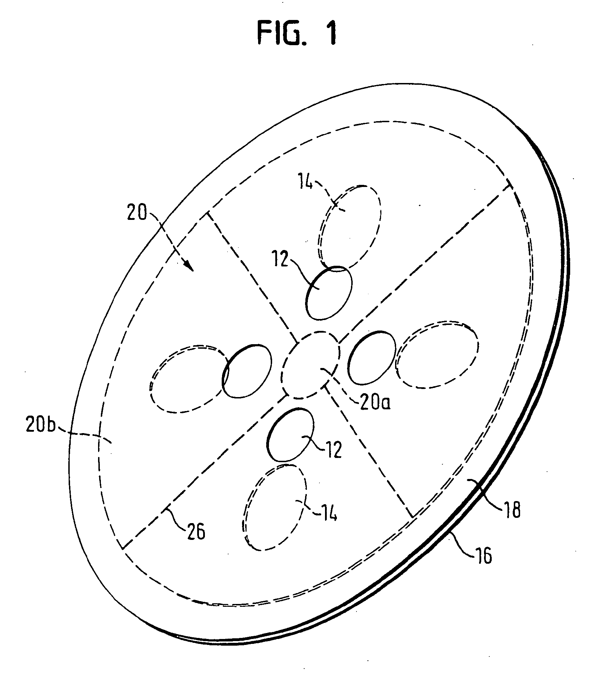

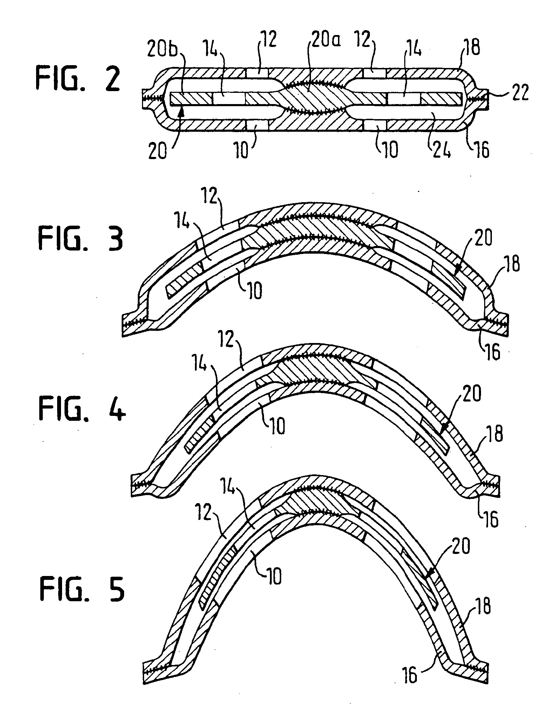

In den Figuren 1 und 2 ist ein Teil eines Gassacks dargestellt, in dem eine Abströmöffnung vorgesehen ist. Die Abströmöffnung setzt sich aus mehreren Öffnungen 10, 12, 14 zusammen, die in verschiedenen Gewebeschichten 16, 18, 20 gebildet sind.

Insbesondere aus Fig. 2 ergibt sich der Aufbau der Abströmöffnung. Der Gassack weist im Bereich der Abströmöffnung eine innere Gewebeschicht 16 und eine äußere Gewebeschicht 18 auf, die durch eine kreisförmige Naht 22 oder Klebung oder dergleichen miteinander verbunden sind. Zwischen der inneren und äußeren Gewebeschicht 16, 18 ist ein in Draufsicht kreisrunder Zwischenraum 24 gebildet, dessen Höhe in den Figuren 2 bis 5 der Übersichtlichkeithalber vergrößert dargestellt ist.

Im Zwischenraum 24 ist eine mittlere Gewebeschicht 20 angeordnet, die nur an ihrem Zentrumsabschnitt 20a mit der inneren und der äußeren Gewebeschicht 16, 18 verbunden ist, d.h. der radial äußere Randabschnitt 20b liegt lose zwischen der inneren und der äußeren Gewebeschicht 16, 18.

Die drei Gewebeschichten 16, 18, 20 weisen jeweils mehrere einander zugeordnete Öffnungen 10, 12, 14 auf. Im aufgeblasenen Zustand des Gassacks, der in Fig. 2 gezeigt ist, fluchten zwar die Öffnungen 10, 12 der inneren und der äußeren Gewebeschicht 16, 18 miteinander, die Öffnungen 14 der mittleren Gewebeschicht 20 liegen jedoch vollständig versetzt zu den Öffnungen 10, 12 der inneren und der äußeren Gewebeschicht 16, 18. Somit ist praktisch kein effektiver Abströmquerschnitt vorhanden, d.h. die Abströmöffnung ist weitestgehend geschlossen.

Bei steigendem Gassackinnendruck dehnen sich aufgrund der Verbindung der inneren und der äußeren Gewebeschicht 16, 18 am Rand des Zwischenraums 24 die den Zwischenraum 24 begrenzenden Abschnitte der inneren und der äußeren Gewebeschicht 16, 18 mit deren Öffnungen 10, 12 gleichartig. Da die mittlere Gewebeschicht 20 aber nur an ihrem Zentrumsabschnitt 20a mit den anderen Gewebeschichten 16, 18 verbunden ist, dehnt sich nur dieser Abschnitt 20a der mittleren Gewebeschicht 20, während der äußere Randabschnitt 20b mit den Öffnungen 14 keine Dehnung erfährt. Dadurch kommt es zu einer relativen Verschiebung der Öffnungen 14 der mittleren Gewebeschicht 20 zu den (gedehnten) Öffnungen 10, 12 der inneren und der äußeren Gewebeschicht 16, 18.

Fig. 3 zeigt den aufgeblasenen Gassack bei geringer Belastung, wie sie z.B. bei einem Eintauchen eines leichten Fahrzeuginsassen in den Gassack auftreten kann. Die Lage der Öffnungen 14 der mittleren Gewebeschicht 20 ist so gewählt, daß sie in diesem Fall mit den Öffnungen 10, 12 der inneren und der äußeren Gewebeschicht 16, 18 fluchten. Der Abströmquerschnitt hat somit die maximal mögliche Größe, so daß der Gassack deutlich weicher wird.

Bei einer stärkeren Belastung, wie sie in Fig. 4 gezeigt ist, verringert sich der Abströmquerschnitt, da die Öffnungen 10, 12, 14 nicht mehr vollständig miteinander fluchten. Auf diese Weise wird die abströmende Gasmenge reduziert. Der Gassackinnendruck entspricht dann dem gewünschten Innendruck für den Aufprall eines schwereren Fahrzeuginsassen.

In Fig. 5 ist der Gassack im Falle einer sehr starken Belastung dargestellt. Der Abströmquerschnitt ist gegenüber dem in Fig. 4 gezeigten Fall noch weiter verringert, so daß ein Durchschlagen des Gassacks verhindert wird.

Wie in Fig. 1 gezeigt, kann die mittlere Gewebeschicht 20 auch noch durch radiale Nähte 26 oder Klebungen oder dergleichen mit der inneren und der äußeren Gewebeschicht 16, 18 verbunden sein, ohne daß sich das oben beschriebene Funktionsprinzip der Abströmöffnung dadurch ändert.

## Patentansprüche

1. Gassack für eine Fahrzeuginsassen-Rückhalteeinrichtung, mit wenigstens einer Abströmöffnung, die durch eine Überdeckung von Öffnungen in mehreren übereinanderliegenden Gewebeschichten gebildet ist, wobei die Gewebeschichten mit den Öffnungen sich abhängig vom Gassackinnendruck relativ zueinander verschieben und damit den Querschnitt der Abströmöffnung ändern, wobei zwischen einer inneren Gewebeschicht (16) und einer äußeren Gewebeschicht (18) mit jeweils wenigstens einer Öffnung (10, 12) eine mittlere Gewebeschicht (20) mit wenigstens einer Öffnung (14) vorgesehen ist, **dadurch gekennzeichnet, daß** sich der Abschnitt (20b) der mittleren Gewebeschicht (20) mit dessen Öffnung (14) abhängig vom Gassackinnendruck relativ zu den Abschnitten der inneren und äußeren Gewebeschicht (16, 18) mit deren Öffnungen (10, 12) so verschiebt, daß sich eine reversible Anpassung des effektiven Querschnitts der Abströmöffnung ergibt.

2. Gassack nach Anspruch 1, **dadurch gekennzeichnet, daß** die innere und die äußere Gewebeschicht (16, 18) so miteinander verbunden sind, daß dazwischen ein Zwischenraum (24) gebildet ist, in dem die mittlere Gewebeschicht (20) angeordnet ist, wobei die mittlere Gewebeschicht (20) an einer Stelle sowohl mit der inneren als auch mit der äußeren Gewebeschicht (16, 18) verbunden ist.

3. Gassack nach Anspruch 2, **dadurch gekennzeichnet, daß** die mittlere Gewebeschicht (20) an einem Zentrumsabschnitt (20a) mit der inneren und der äußeren Gewebeschicht (16, 18) verbunden ist.

4. Gassack nach einem der vorhergehenden Ansprüche, **dadurch gekennzeichnet, daß** die Öffnung (14) der mittleren Gewebeschicht (20) im aufgeblasenen Zustand des Gassacks ohne äußere Einwirkung versetzt zu den Öffnungen (10, 12) der inneren und der äußeren Gewebeschicht (16, 18) angeordnet ist.

5. Gassack nach einem der vorhergehenden Ansprüche, **dadurch gekennzeichnet, daß** die innere und die äußere Gewebeschicht (16, 18) durch eine die mittlere Gewebeschicht (20) vollständig umgebende Naht (22) oder Klebung oder dergleichen miteinander verbunden sind.

6. Gassack nach einem der vorhergehenden Ansprüche, **dadurch gekennzeichnet, daß** die mittlere Gewebeschicht (20) im wesentlichen kreisrund ist.

7. Gassack nach einem der vorhergehenden Ansprüche, **dadurch gekennzeichnet, daß** in den Gewebeschichten (16, 18, 20) mehrere miteinander korrespondierende Öffnungen (10, 12, 14) vorgesehen sind.

## Claims

1. A gas bag for a vehicle occupant restraint arrangement, comprising at least one discharge opening which is formed by an overlapping of openings in several layers of fabric lying one over another, the layers of fabric with the openings moving relative to each other depending on the internal pressure of the gas bag and thereby altering the cross-section of the discharge opening, a middle fabric layer (20) having at least one opening (14) being provided between an inner fabric layer (16) and an outer fabric layer (18) each having at least one opening (10, 12), **characterized in that** the section (20b) of the middle fabric layer (20) with its opening (14) moves relative to the sections of the inner and outer fabric layers (16, 18) with their openings (10, 12) depending on the internal pressure of the gas bag such that a reversible adaptation of the effective cross-section of the discharge opening is attained.

2. The gas bag according to claim 1, **characterized in that** the inner and outer fabric layers (16, 18) are connected with each other such that an intermediate space (24) is formed therebetween in which the middle fabric layer (20) is arranged, the middle fabric layer (20) being connected at one point both with the inner and the outer fabric layers (16, 18).

3. The gas bag according to claim 2, **characterized in that** the middle fabric layer (20) is connected at a centre section (20a) with the inner and the outer fabric layers (16, 18).

4. The gas bag according to any of the preceding claims, **characterized in that** in the inflated state of the gas bag without external intervention, the opening (14) of the middle fabric layer (20) is arranged offset in relation to the openings (10, 12) of the inner and outer fabric layers (16, 18).

5. The gas bag according to any of the preceding claims, **characterized in that** the inner and outer fabric layers (16, 18) are connected with each other by a seam (22) or glued portion or the like entirely surrounding the middle fabric layer (20).

6. The gas bag according to any of the preceding claims, **characterized in that** the middle fabric layer (20) is substantially circular.

7. The gas bag according to any of the preceding claims, **characterized in that** several openings (10, 12, 14) corresponding with each other are provided in the fabric layers (16, 18, 20).

## Revendications

1. Coussin à gaz pour un système de retenue de passager de véhicule, comportant au moins un orifice d'échappement qui est formé par un chevauchement d'ouvertures dans plusieurs couches de tissu superposées, les couches de tissus avec les ouvertures se déplaçant les unes par rapport aux autres en fonction de la pression intérieure du coussin à gaz et modifiant ainsi la section transversale de l'orifice d'échappement, une couche de tissu médiane (20) comportant au moins une ouverture (14) étant prévue entre une couche de tissu intérieure (16) et une couche de tissu extérieure (18) comportant chacune au moins une ouverture (10, 12), **caractérisé en ce que** le tronçon (20b) de la couche de tissu médiane (20) avec son ouverture (14) se déplace par rapport aux tronçons des couches intérieure et extérieure (16, 18) avec leurs ouvertures (10, 12) en fonction de la pression intérieure de coussin à gaz, de telle sorte qu'il en résulte une adaptation réversible de la section transversale effective de l'orifice d'échappement.

2. Coussin à gaz selon la revendication 1, **caractérisé en ce que** les couches de tissu intérieure et extérieure (16, 18) sont reliées l'une à l'autre de telle sorte qu'entre elles est formé un espace intermédiaire (24) dans lequel est agencée la couche de tissu médiane (20), la couche de tissu médiane (20) étant reliée, en un point, tant avec la couche de tissu intérieure qu'avec la couche de tissu extérieure (16, 18).

3. Coussin à gaz selon la revendication 2, **caractérisé en ce que** sur un tronçon central (20a), la couche de tissu médiane (20) est reliée aux couches intérieure et extérieure (16, 18).

4. Coussin à gaz selon l'une des revendications précédentes, **caractérisé en ce qu'**à l'état gonflé du coussin à gaz sans intervention extérieure, l'ouverture (14) de la couche de tissu médiane (20) est agencée en décalage par rapport aux ouvertures (10, 12) des couches de tissu intérieure et extérieure (16, 18).

5. Coussin à gaz selon l'une des revendications précédentes, **caractérisé en ce que** les couches de tissu intérieure et extérieure (16, 18) sont reliées l'une à l'autre par une couture (22) ou par un collage ou similaire qui entoure totalement la couche de tissu médiane (20).

6. Coussin à gaz selon l'une des revendications précédentes, **caractérisé en ce que** la couche de tissu médiane (20) est sensiblement circulaire.

7. Coussin à gaz selon l'une des revendications précédentes, **caractérisé en ce que** dans les couches de tissu (16, 18, 20) sont prévues plusieurs ouvertures (10, 12, 14) correspond les unes aux autres.
